# EUROPEAN PATENT APPLICATION

(11) **EP 2 226 215 A1**
(43) Date of publication of application: **08.09.2010**
(21) Application number: 08862233.7
(22) Date of filing: 11.12.2008
(51) Int. Cl.: B60L 3/00, B60K 6/445, B60L 11/14, B60L 11/18, B60R 16/03, H02M 3/155, H02M 7/48

(54) **POWER SUPPLY UNIT FOR VEHICLE**

(30) Priority: 18.12.2007 JP 2007325892
(71) Applicant: Toyota Jidosha Kabushiki Kaisha, Toyota-shi, Aichi 471-8571 (JP); Aisin AW Co., Ltd., Fujii-cho Anjo-shi Aichi 444-1192 (JP)
(72) Inventor: MITSUTANI, Noritake, Toyota-shi Aichi 471-8571 (JP); KATSUDA, Toshihiro, Toyota-shi Aichi 471-8571 (JP); NISHIU, Masahiro, Anjo-shi Aichi 444-1192 (JP)
(74) Representative: Kuhnen & Wacker
(86) International application number: PCT/JP2008/072496
(87) International publication number: WO 2009/078328

(57) **Abstract**

When failure that renders an output from a voltage sensor (13) unusable is detected, a control device (30) sets a connection unit (40S) to a non-connected state and controls a voltage converter (12S) to be in a voltage non-conversion state, and causes a terminal on a side of the connection unit (40S) of the voltage converter (12S) to output a voltage of a positive electrode bus (PL2), thereby controlling the voltage of the positive electrode bus (PL2) based on an output from a voltage sensor (21S) instead of the output from the voltage sensor (13). A power supply apparatus for a vehicle capable of traveling in limp-home mode while maintaining travel performance to a maximum extent even in the event of failure of the sensor is thus provided.

## Description

### TECFINICAL FIELD

The present invention relates to a power supply apparatus for a vehicle, and more particularly to a power supply apparatus for a vehicle, including a plurality of power storage devices and a plurality of voltage converters.

### BACKGROUND ART

Japanese Patent Laying-Open No. 2002-10502 (Patent Document 1) discloses a charge and discharge device for a storage battery for simultaneously charging a plurality of storage batteries and causing them to discharge. This charge and discharge device for a storage battery includes a charging rectification circuit for rectifying an AC power supply, a regenerative rectification circuit in antiparallel to this charging rectification circuit for regenerating a quantity of electricity of the storage batteries to the AC power supply, a step-up/down converter having a switching element at an output of the charging rectification circuit for controlling the output, a smoothing capacitor for smoothing an output from the step-up/down converter, a first voltage detector for detecting a voltage across opposing ends of the smoothing capacitor, and a second voltage detector for detecting storage battery voltages of the storage batteries. The step-up/down converter is controlled such that a signal detected by the first voltage detector is equal to a signal detected by the second voltage detector.

Such control of the step-up/down converter eliminates the need to provide a current-limiting resistor having a large capacity for limiting an inrush current at the start of discharge, and to provide the current-limiting resistor and opening/closing means, for each storage battery.
Patent Document 1: Japanese Patent Laying-Open No. 2002-10502
Patent Document 2: Japanese Patent Laying-Open No. 2006-325322

### DISCLOSURE OF THE INVENTION

### PROBLEMS TO BE SOLVED BY THE INVENTION

In recent years, electric cars and fuel cell cars in which wheels are driven by a motor; and hybrid cars using a motor in combination with an engine as a driving source have attracted attention as environmentally friendly vehicles. In such vehicles; a voltage of a voltage source such as a storage battery is stepped up by a step-up/down converter for supply to an inverter for driving a motor.

Further, in such vehicles, mounting of a plurality of power storage devices has been studied in order to ensure both of fuel efficiency and mechanical power performance and to improve a travel distance without supply. If a plurality of power storage devices are mounted on a power supply apparatus for a vehicle, it is again necessary to provide a current-limiting resistor having a large capacity for limiting an inrush current at the start of discharge, and to provide the current-limiting resistor and opening/closing means for each power storage device.

Japanese Patent Laying-Open No. 2002-10502 (Patent Document 1) described above relates to a device connected to a commercial three-phase AC power supply, for conducting charge and discharge tests of a storage battery. In such testing equipment, when failure occurs in a voltage sensor for measuring a voltage in order to conduct the charge and discharge tests, for example, the device may be stopped and repaired.

In case failure of a sensor occurs in a vehicle, however, it is preferable that the vehicle can travel, if capable of traveling, under its own power to a place where the failure may be recovered. Since the vehicle may have to pass a car and the like even during such travel in limp-home mode, it is also preferable that the vehicle can travel with high performance by stepping up a voltage of a storage battery. Accordingly, even in the event of failure of a sensor, a system needs to be activated to a maximum extent to maintain its performance in a power supply apparatus for a vehicle.

An object of the present invention is to provide a power supply apparatus for a vehicle capable of traveling in limp-home mode while maintaining travel performance to a maximum extent even in the event of failure of a sensor.

### MEANS FOR SOLVING THE PROBLEMS

In summary, according to the present invention, a power supply apparatus for a vehicle includes a first power storage device, a power supply line for feeding power to an inverter for driving a motor, a first voltage converter provided between the first power storage device and the power supply line, for converting a voltage, a second power storage device, a second voltage converter provided between the second power storage device and the power supply line, for converting a voltage, a connection unit provided between the second power storage device and the second voltage converter, for switching an electrically connected state, a first voltage sensor for detecting a voltage of the power supply line, a second voltage sensor for detecting a voltage of a terminal on a side of the connection unit of the second voltage converter, and a control device for controlling the first and second voltage converters and the connection unit. When failure that renders an output from the first voltage sensor unusable is detected, the control device sets the connection unit to a non-connected state and controls the second voltage converter to be in a voltage non-conversion state, and causes the terminal on the side of the connection unit of the second voltage converter to output a voltage of the power supply line, thereby controlling a voltage of the power supply line based on an output from the second voltage sensor instead of the output from the first voltage sensor.

Preferably, the power supply line includes a positive electrode bus and a negative electrode bus. The power supply apparatus for a vehicle further includes a smoothing capacitor connected between the positive electrode bus and the negative electrode bus. The control device controls precharging to the smoothing capacitor as a type of voltage control of the power supply line.

Still preferably, the power supply apparatus for a vehicle further includes a master connection unit provided between the first power storage device and the first voltage converter, for switching an electrically connected state among a first connected state, a second connected state with a resistance being higher than in the first connected state, and a non-connected state. In controlling the precharging, the control device switches the master connection unit from the non-connected state to the second connected state to start precharging to the smoothing capacitor in response to a vehicle activation instruction, and thereafter switches the master connection unit from the second connected state to the first connected state based on the output from the second voltage sensor.

Preferably, the control device controls a voltage of the first voltage converter as a type of voltage control of the power supply line.

Still preferably, when the output from the first voltage sensor can be used, the control device controls the voltage of the first voltage converter based on the output from the first voltage sensor, and controls a current through the second voltage converter such that the current passing through the second voltage converter attains to a target current by setting the connection unit to a connected state.

Preferably, the first voltage sensor and the second voltage sensor are equal to each other in a measurable input voltage range.

Still preferably, the power supply apparatus for a vehicle further includes a master connection unit provided between the first power storage device and the first voltage converter, for switching an electrically connected state, and a third voltage sensor for detecting a voltage of a terminal on a side of the master connection unit of the first voltage converter. The first and second voltage sensors are higher than the third voltage sensor in a measurable upper limit voltage.

### EFFECTS OF THE INVENTION

According to the present invention, travel in limp-home mode can be achieved while maintaining travel performance to a maximum extent even in the event of failure of a sensor.

Moreover, the power supply system can be activated even after being stopped once, and can be resumed even after the travel in limp-home mode is suspended.

### BRIEF DESCRIPTION OF THE DRAWINGS

Fig. 1 is a circuit diagram showing a configuration of a vehicle 100 having two batteries mounted thereon as power storage devices.
Fig. 2 is a flowchart for illustrating control of a power supply apparatus for the vehicle executed in a first embodiment.
Fig. 3 is an operation waveform diagram in which activation of a system is completed when VH is normal, i.e., through a process at steps S3 to S7 in Fig. 2.
Fig. 4 is an operation waveform diagram in which activation of the system is completed when VH is abnormal, i.e., through a process at steps S8 to S13 in Fig. 2.
Fig. 5 is a flowchart for illustrating a process when failure is detected, which is performed in a second embodiment.
Fig. 6 shows an output characteristic of a voltage sensor for a low voltage system.
Fig. 7 shows an output characteristic of a voltage sensor for a high voltage system.
Fig. 8 illustrates control of voltage converters when VH is normal after the vehicle enters a ReadyON state in the first or second embodiment.
Fig. 9 illustrates control of the voltage converters in the event of failure of VH after the vehicle enters the ReadyON state in the first or second embodiment.

### DESCRIPTION OF THE REFERENCE SIGNS

2 wheel; 3 power split device; 4 engine; 10M, 10S, 13, 21M, 21S voltage sensor; 11M, 11S, 24, 25 current sensor; 12M, 12S voltage converter; 14, 22 inverter; 15 U-phase arm; 16 V-phase arm; 17 W-phase arm; 30 control device; 40M, 40S connection unit; 52 DC-DC converter for auxiliary machinery; 54 auxiliary machinery battery; 56 air conditioner; 100 vehicle; BM, BS battery; CH, CLM, CLS smoothing capacitor; D1M, D2M, D1S, D2S, D3 to D8 diode; L1M, L1S reactor; MG1, MG2 motor generator; PL1M, PL1S, PL2 positive electrode bus; Q1M, Q2M, Q1S, Q2S, Q3 to Q8 IGBT element; RM, RS current-limiting resistor; SL negative electrode bus; SMR1M, SMR2M, SMR3M, SMR1S, SMR2S, SMR3S system main relay.

### BEST MODES FOR CARRYING OUT THE INVENTION

Hereinafter, embodiments of the present invention will be described in detail with reference to the drawings. It is noted that the same or corresponding elements have the same reference characters in the drawings, and description thereof will not be repeated.

### [General Configuration of Vehicle]

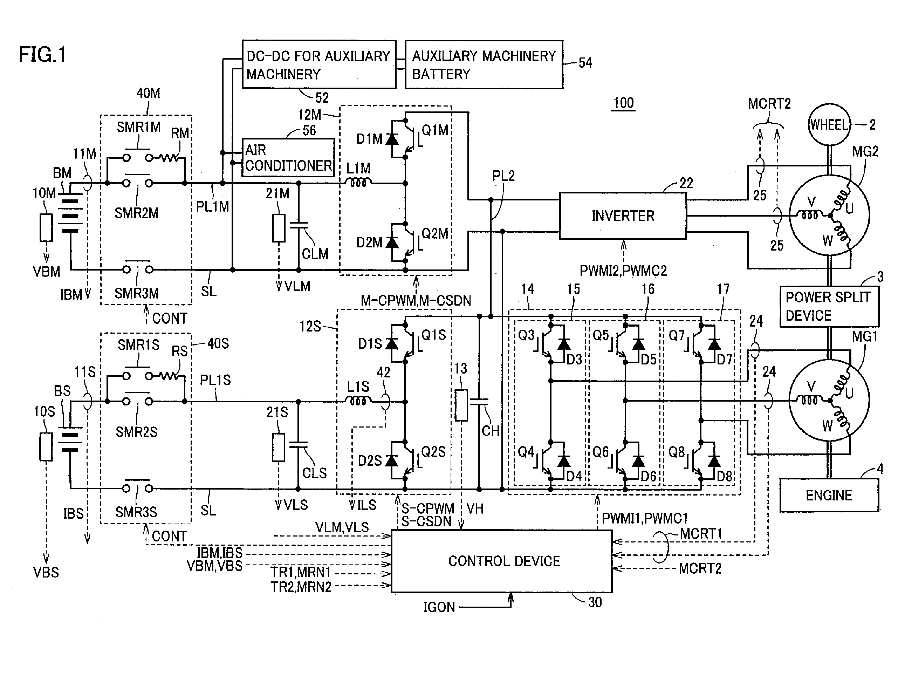

Fig. 1 is a circuit diagram showing a configuration of a vehicle 100 having two batteries mounted thereon as power storage devices.

Referring to Fig. 1, vehicle 100 includes a master power supply unit, a slave power supply unit, a smoothing capacitor CH for smoothing a voltage from the master power supply unit and the slave power supply unit, a voltage sensor 13 for detecting a voltage across terminals of smoothing capacitor CH, inverters 14, 22, an engine 4, motor generators MG1, MG2, a power split device 3, a wheel 2, and a control device 30.

The master power supply unit includes a battery BM for power storage, a connection unit 40M for disconnection and connection of battery BM, a voltage converter 12M and a smoothing capacitor CLM connected to battery BM via connection unit 40M, a voltage sensor 21M for detecting a voltage across terminals of smoothing capacitor CLM, a voltage sensor 10M for measuring a voltage VBM across terminals of battery BM, and a current sensor 11M for sensing a current IBM through battery BM. A secondary battery such as a lead-acid battery, a nickel-metal hydride battery, or a lithium-ion battery may be used as battery BM.

The slave power supply unit includes a battery BS for power storage, a connection unit 40S for disconnection and connection of battery BS, a voltage converter 12S and a smoothing capacitor CLS connected to battery BS via connection unit 40S, a voltage sensor 21S for detecting a voltage across terminals of smoothing capacitor CLS, a voltage sensor 10S for measuring a voltage VBS across terminals of battery BS, and a current sensor 11S for sensing a current IBS through battery BS. A secondary battery such as a lead-acid battery, a nickel-metal hydride battery, or a lithium-ion battery may be used as battery BS. Since voltage converter 12S is provided, a battery having characteristics such as a voltage and a capacity different from those of battery BM can be used as battery BS.

Smoothing capacitor CLM is connected between a positive electrode bus PL1M and a negative electrode bus SL. Voltage sensor 21M senses a voltage VLM across opposing ends of smoothing capacitor CLM, and outputs the same to control device 30. Voltage converter 12M steps up the voltage across the terminals of smoothing capacitor CLM.

Smoothing capacitor CLS is connected between a positive electrode bus PL1ES and negative electrode bus SL. Voltage sensor 21S senses a voltage VLS across opposing ends of smoothing capacitor CLS, and outputs the same to control device 30. Voltage converter 12S steps up the voltage across the terminals of smoothing capacitor CLS.

Smoothing capacitor CH smoothes the voltage stepped up by voltage converters 12M, 12S. Voltage sensor 13 senses a voltage VH across terminals of smoothing capacitor CH, and outputs the same to control device 30.

Inverter 14 converts a DC voltage provided from voltage converter 12S or 12M to a three-phase alternating current, and outputs the same to motor generator MG1. Inverter 22 converts a DC voltage provided from voltage converter 12S or 12M to a three-phase alternating current, and outputs the same to motor generator MG2.

Power split device 3 is coupled to engine 4 and motor generators MG1, MG2, and splits mechanical power among them. For example, a planetary gear mechanism having three rotation shafts of a sun gear, a planetary carrier, and a ring gear may be used as the power split device. These three rotation shafts are connected to rotation shafts of engine 4 and motor generators MG1, MG2, respectively. When rotation speeds of two of the three rotation shafts are determined, a rotation speed of the one remaining shaft is forcibly determined. The rotation shaft of motor generator MG2 is coupled to wheel 2 by means of a not-shown reduction gear or differential gear. Power split device 3 may further incorporate therein a decelerator for the rotation shaft of motor generator MG2.

Connection unit 40M is connected to positive electrode bus PL1M and negative electrode bus SL. Connection unit 40M includes a system main relay SMR3M connected between a negative electrode of battery BM and negative electrode bus SL, a system main relay SMR2M connected between a positive electrode of battery BM and positive electrode bus PL1M, and a system main relay SMR1M and a current-limiting resistor RM connected in series, that are connected in parallel to system main relay SMR2M. Conducting/non-conducting states of system main relays SMR1M to SMR3M are controlled in response to a control signal CONT provided from control device 30.

Connection unit 40S is connected to positive electrode bus PL1S and negative electrode bus SL. Connection unit 40S includes a system main relay SMR3S connected between a negative electrode of battery BS and negative electrode bus SL, a system main relay SMR2S connected between a positive electrode of battery BS and positive electrode bus PL1S, and a system main relay SMR1S and a current-limiting resistor RS connected in series, that are connected in parallel to system main relay SMR2S. Conducting/non-conducting states of system main relays SMR1S to SMR3S are controlled in response to control signal CONT provided from control device 30.

Voltage converter 12M includes a reactor L1M having one end connected to positive electrode bus PL1M, IGBT elements Q1M, Q2M connected in series between a positive electrode bus PL2 and negative electrode bus SL, and diodes D1M, D2M connected in parallel to IGBT elements Q1M, Q2M, respectively.

Reactor L1M has the other end connected to an emitter of IGBT element Q1M and a collector of IGBT element Q2M. Diode D1M has a cathode connected to a collector of IGBT element Q1M, and an anode connected to the emitter of IGBT element Q1M. Diode D2M has a cathode connected to the collector of IGBT element Q2M, and an anode connected to an emitter of IGBT element Q2M.

Voltage converter 12S includes a reactor L1S having one end connected to positive electrode bus PL1S, IGBT elements Q1S, Q2S connected in series between positive electrode bus PL2 and negative electrode bus SL, and diodes D1S, D2S connected in parallel to IGBT elements Q1S, Q2S, respectively.

Reactor L1S has the other end connected to an emitter of IGBT element Q1S and a collector of IGBT element Q2S. Diode D1S has a cathode connected to a collector of IGBT element Q1S, and an anode connected to the emitter of IGBT element Q1S. Diode D2S has a cathode connected to the collector of IGBT element Q2S, and an anode connected to an emitter of IGBT element Q2S.

Inverter 14 receives the stepped-up voltage from voltage converters 12M and 12S, and drives motor generator MG1 in order to start engine 4, for example. Inverter 14 also returns electric power, which is generated at motor generator MG1 through mechanical motive power transmitted from engine 4, to voltage converters 12M and 12S. Here, voltage converters 12M and 12S are controlled to operate as step-down circuits by control device 30.

Inverter 14 includes a U-phase arm 15, a V-phase arm 16, and a W-phase arm 17. U-phase arm 15, V-phase arm 16, and W-phase arm 17 are connected in parallel between positive electrode bus PL2 and negative electrode bus SL.

U-phase arm 15 includes IGBT elements Q3, Q4 connected in series between positive electrode bus PL2 and negative electrode bus SL, and diodes D3, D4 connected in parallel to IGBT elements Q3, Q4, respectively. Diode D3 has a cathode connected to a collector of IGBT element Q3, and an anode connected to an emitter of IGBT element Q3. Diode D4 has a cathode connected to a collector of IGBT element Q4, and an anode connected to an emitter of IGBT element Q4.

V-phase arm 16 includes IGBT elements Q5, Q6 connected in series between positive electrode bus PL2 and negative electrode bus SL, and diodes D5, D6 connected in parallel to IGBT elements Q5, Q6, respectively. Diode D5 has a cathode connected to a collector of IGBT element Q5, and an anode connected to an emitter of IGBT element Q5. Diode D6 has a cathode connected to a collector of IGBT element Q6, and an anode connected to an emitter of IGBT element Q6.

W-phase arm 17 includes IGBT elements Q7, Q8 connected in series between positive electrode bus PL2 and negative electrode bus SL, and diodes D7, D8 connected in parallel to IGBT elements Q7, Q8, respectively. Diode D7 has a cathode connected to a collector of IGBT element Q7, and an anode connected to an emitter of IGBT element Q7. Diode D8 has a cathode connected to a collector of IGBT element Q8, and an anode connected to an emitter of IGBT element Q8.

A midpoint of the arm of each phase is connected to an end of each phase of a coil of each phase of motor generator MG1. That is, motor generator MG1 is a three-phase permanent magnet synchronous motor in which the respective one ends of the three U-, V-, and W-phase coils are all connected to a neutral point. The U-phase coil has the other end connected to a connection node between IGBT elements Q3 and Q4. The V-phase coil has the other end connected to a connection node between IGBT elements Q5 and Q6. The W-phase coil has the other end connected to a connection node between IGBT elements Q7 and Q8.

A current sensor 24 detects a current through motor generator MG1 as a motor current value MCRT1, and outputs motor current value MCRT1 to control device 30.

Inverter 22 is connected to positive electrode bus PL2 and negative electrode bus SL. Inverter 22 converts a DC voltage output from voltage converters 12M and 12S to a three-phase alternating current, and outputs the same to motor generator MG2 for driving wheel 2. Inverter 22 also returns electric power generated at motor generator MG2 to voltage converters 12M and 12S as a result of regenerative braking. Here, voltage converters 12M and 12S are controlled to operate as step-down circuits by control device 30. Although not shown, an internal configuration of inverter 22 is similar to that of inverter 14, and detailed description thereof will not be repeated.

A current sensor 25 detects a current through motor generator MG2 as a motor current value MCRT2, and outputs motor current value MCRT2 to control device 30.

Control device 30 receives torque control values TR1, TR2, motor revolution speeds MRN1, MRN2, values of voltages VBM, VBS, VH, and of currents IBM, IBS, motor current values MCRT1, MCRT2, and an activation signal IGON. Then, control device 30 outputs a control signal M-CPWM indicating step-up and step-down of a voltage and a signal M-CSDN indicating prohibition of operation to voltage converter 12M. Control device 30 also outputs a control signal S-CPWM indicating step-up and step-down of a voltage and a signal S-CSDN indicating prohibition of operation to voltage converter 12S.

In addition, control device 30 outputs to inverter 14 a drive instruction PWMI1 for converting a DC voltage output from voltage converters 12M, 12S to an AC voltage for driving motor generator MG1, and a regeneration instruction PWMC1 for converting an AC voltage generated at motor generator MG1 to a DC voltage and returning the same toward voltage converters 12M, 12S.

Similarly, control device 30 outputs to inverter 22 a drive instruction PWMI2 for converting the DC voltage to an AC voltage for driving motor generator MG2, and a regeneration instruction PWMC2 for converting an AC voltage generated at motor generator MG2 to a DC voltage and returning the same toward voltage converters 12M, 12S.

Vehicle 100 further includes an air conditioner 56 connected to positive electrode bus PL1M and negative electrode bus SL, a DC-DC converter 52 for auxiliary machinery, and an auxiliary machinery battery 54 charged by the DC-DC converter for auxiliary machinery.

A power supply voltage is supplied to control device 30 and other auxiliary machinery from auxiliary machinery battery 54.

### [First Embodiment]

In the vehicle shown in Fig. 1, capacitor CH has often discharged by the time of start of activation of the vehicle. If the system main relay is rendered conductive in such a state, an excessive inrush current may flow to cause welding of the relay and breakdown of a power element. Because of this, the system main relay is set to a connected state with a high resistance to limit a current at the beginning of charging to capacitor CH, and is reconnected to be in a state with a low resistance upon charging to a certain extent. Such charging is called precharging.

When voltage VH detected by voltage sensor 13 cannot be used, however, determination that charging to the capacitor has been completed cannot be made, resulting in inability to switch the system main relay to activate a system. For this reason, in the present embodiment, a detected value from another voltage sensor 21S is used for precharging even when an output value from voltage sensor 13 cannot be used.

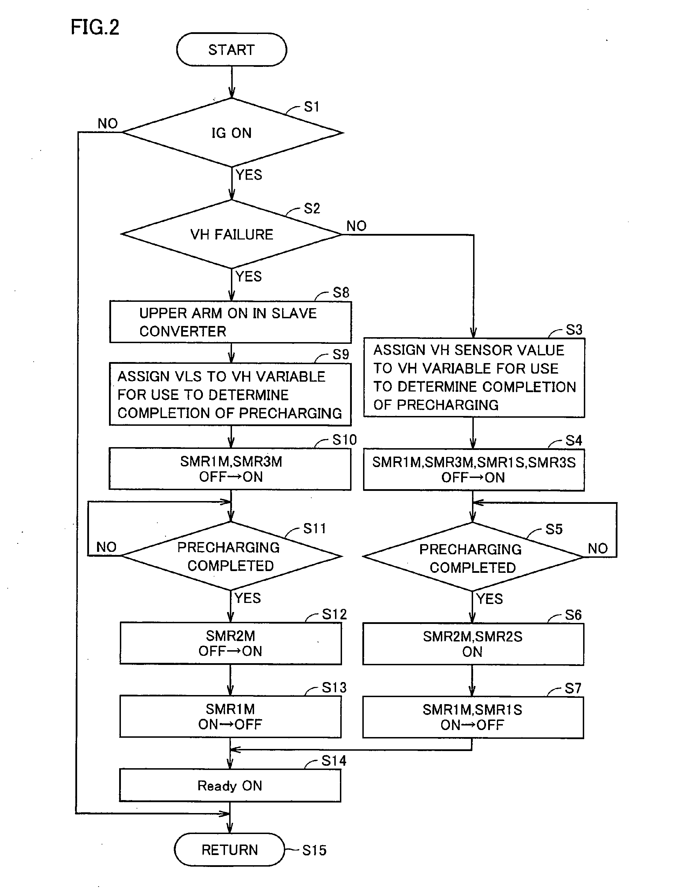

Fig. 2 is a flowchart for illustrating control of a power supply apparatus for the vehicle executed in the first embodiment. A process in this flowchart is called from a main routine for controlling travel of the vehicle and executed at regular time intervals or when a predetermined condition is satisfied.

Referring to Figs. 1 and 2, first, at step S1, it is determined whether or not an activation instruction by system activation signal IGON has been provided through a driver's operation of a key or a button. If an activation instruction has not been provided, the process proceeds to step S15, where control is moved to the main routine. If it is detected at step S1 that an activation instruction has been provided, on the other hand, at subsequent step S2, presence or absence of failure of voltage sensor 13 for detecting voltage VH is determined.

Here, the failure of voltage sensor 13 means determination that voltage VH detected by the sensor cannot be used at a side of control device 30.

If control device 30 is implemented by a plurality ofECUs (Electric Control Units) such as an ECU for a motor generator and an ECU for a hybrid system, for example, abnormality of communication between the ECUs and failure of the ECUs receiving a value from the sensor are also detected as failure of VH at step S2.

Moreover, abnormality of a power supply system for a not-shown sensor coupled to voltage sensor 13, abnormality of wire connection of voltage sensor 13 itself (short circuit to ground or a power supply), and the like are also detected as failure of VH at step S2.

If failure of VH is not determined at step S2 (NO at step S2), the process proceeds to step S3. At step S3, voltage VH detected by voltage sensor 13 is assigned to a VH variable for controlling a voltage of voltage converter 12M. This VH variable is also used to determine whether or not capacitor CH has been precharged.

Next, at step S4, system main relays SMR1M, SMR3M, SMR1S, and SMR3S are changed from an OFF state to an ON state. Consequently, capacitors CLM, CLS and capacitor CH are charged (precharged) to increase voltage VH. This increase is monitored by control device 30 based on an output from voltage sensor 13, and at step S5, it is determined whether or not precharging has been completed. It is determined at step S5 that precharging has been completed when voltage VH reaches a threshold value VH1, and the process proceeds to step S6.

At step S6, system main relays SMR2M, SMR2S are set from an OFF state to an ON state, and thereafter at step S7, system main relays SMR1M, SMR1S are set from an ON state to an OFF state.

If failure of VH is determined at step S2 (YES at step S2), a process at steps S8 to S13 is executed instead of the process at steps S3 to S7.

At step S8, voltage converter 12S on the slave side is set to an upper-arm-ON state. The upper-arm-ON state is such that IGBT element Q1S is fixed to an ON state and IGBT element Q2S is fixed to an OFF state. When voltage converter 12S is set to the upper-arm-ON state, positive electrode bus PL2 and positive electrode bus PL1S become equal to each other in voltage.

Immediately after the activation instruction by activation signal IGON is provided, connection units 40M, 40S are both in an OFF state, so that a voltage of battery BS has not been provided to positive electrode bus PL1S. Thus, by setting connection unit 40M to an ON state while keeping connection unit 40S in an OFF state, a voltage of positive electrode bus PL2 becomes equal to voltage VLS detected by voltage sensor 21S. Accordingly, voltage VLS can be used to determine whether or not capacitor CH has been precharged, or to control a voltage of voltage converter 12M.

After fixing voltage converter 12S to the upper-arm-ON state at step S8, at step S9, voltage VLS detected by voltage sensor 21S is assigned to the VH variable for controlling a voltage of voltage converter 12M. This VH variable is also used to determine whether or not capacitor CH has been precharged.

Thereafter, at step S10, system main relays SMR1M, SMR3M are changed from an OFF state to an ON state. Consequently, capacitor CLM and capacitor CH are charged (precharged) to increase voltage VLS. This increase is monitored by control device 30 based on an output from voltage sensor 21S, and at step S11, it is determined whether or not precharging has been completed. It is determined at step S11 that precharging has been completed when voltage VLS reaches threshold value VH1, and the process proceeds to step S12.

At step S12, system main relay SMR2M is changed from an OFF state to an ON state, and thereafter at step S13, system main relay SMR1M is changed from an ON state to an OFF state.

Here, system main relays SMR1S, SMR2S, and SMR3S are all in an OFF state.

Upon completion of the processing at step S7 or step S13, activation of the system is completed, and at step S14, the vehicle enters a ReadyON state (a state where the vehicle is capable of traveling as a vehicle). Then, at step S15, control is moved to the main routine for controlling travel.

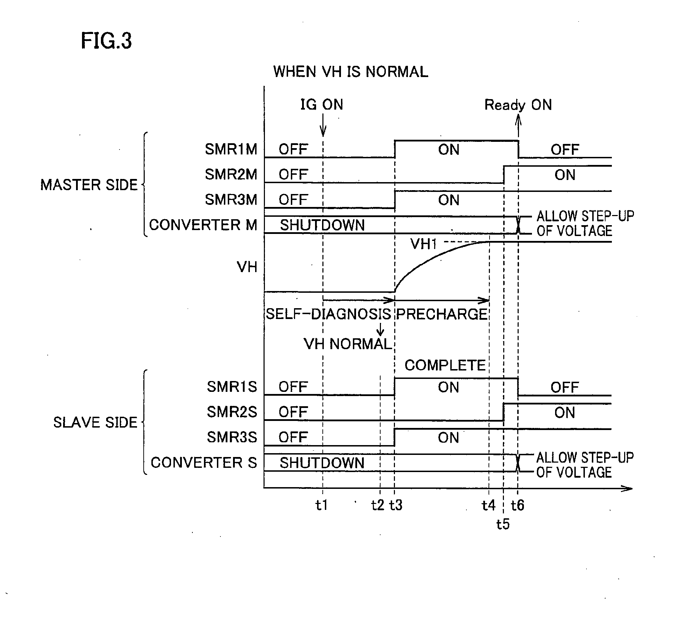

Fig. 3 is an operation waveform diagram in which activation of the system is completed when VH is normal, i.e., through the process at steps S3 to S7 in Fig. 2.

Referring to Figs. 2 and 3, upon input of an activation instruction by activation signal IGON at time t1, a self-diagnosis of the power supply apparatus for the vehicle is carried out during a period from time t1 to time t3. If VH is diagnosed as normal at time t2 during this period (NO at step S2), a voltage value obtained from an output of voltage sensor 13 is assigned to the VH variable for use to determine completion of precharging.

Then, at time t3, system main relays SMR1M, SMR3M, SMR1S, and SMR3S are changed from an OFF state to an ON state. Consequently, capacitors CLM, CLS and capacitor CH are charged (precharged) to increase voltage VH. During a period from time t3 to t4, the increase in voltage VH is monitored by control device 30 based on an output from voltage sensor 13.

At time t4, voltage VH reaches threshold value VH1, and it is determined that precharging has been completed (YES at step S5). At time t5, system main relays SMR2M, SMR2S are set from an OFF state to an ON state, and thereafter at time t6, system main relays SMR1M, SMR1S are set from an ON state to an OFF state, completing activation of the system and causing the vehicle to enter the ReadyON state.

After time t6 when the vehicle enters the ReadyON state, prohibition of ON/OFF switching of the IGBTs by shutdown signals M-CSDN, S-CSDN is canceled, to allow voltage converters 12M, 12S to step up a voltage.

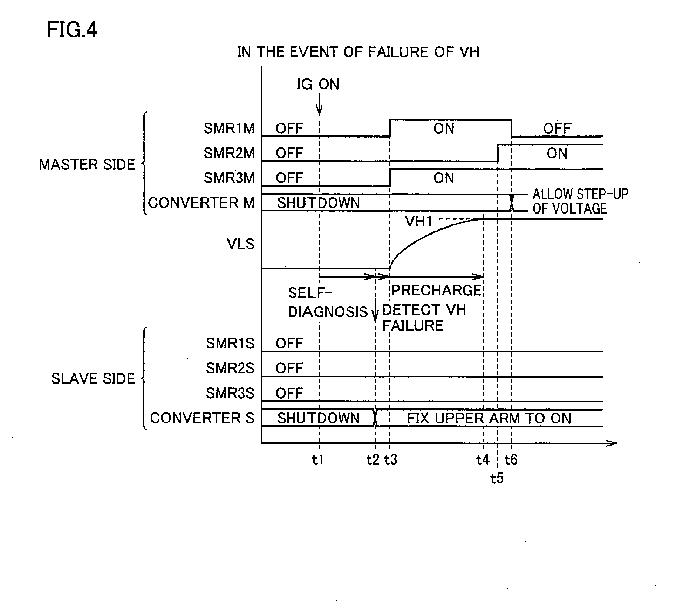

Fig. 4 is an operation waveform diagram in which activation of the system is completed when VH is abnormal, i.e., through the process at steps S8 to S13 in Fig. 2.

Referring to Figs. 2 and 4, upon input of an activation instruction by activation signal IGON at time t1, a self-diagnosis of the power supply apparatus for the vehicle is carried out during a period from time t1 to time t3. If VH is diagnosed as failure at time t2 during this period (YES at step S2), voltage converter 12S on the slave side has a shutdown state canceled, and is fixedly set to the upper-arm-ON state. Then, a value of voltage VLS obtained from voltage sensor 21S instead of an output from voltage sensor 13 is assigned to the VH variable for use to determine completion of precharging.

Then, at time t3, system main relays SMR1M, SMR3M are changed from an OFF state to an ON state. Consequently, capacitor CLM and capacitor CH are charged (precharged) to increase voltage VLS. During a period from time t3 to t4, control device 30 monitors the increase in voltage VH by checking an output from voltage sensor 21S.

At time t4, voltage VLS reaches threshold value VH1, and it is determined that precharging has been completed (YES at step S11). At time t5, system main relay SMR2M is changed from an OFF state to an ON state, and thereafter at time t6, system main relay SMR1M is changed from an ON state to an OFF state, completing activation of the system and causing the vehicle to enter the ReadyON state.

After time t6 when the vehicle enters the ReadyON state, prohibition of ON/OFF switching of the IGBTs by shutdown signal M-CSDN is canceled, to allow voltage converter 12M to step up a voltage. A power supply voltage is supplied to inverters 14, 22 only by battery BM and voltage converter 12M on the master side, while system main relays SMR1S, SMR2S, and SMR3S remain in an OFF state and voltage converter 12S remains fixed to the upper-arm-ON state on the slave side.

As described above, according to the first embodiment, when failure of VH is detected during activation of the vehicle, the vehicle can move under its own power to a place where the failure is recovered while maintaining travel performance of the vehicle to a maximum extent without stopping functions of voltage converter 12M.

Moreover, the power supply system can be activated even after being stopped once, and can be resumed even after suspending travel in limp-home mode.

### [Second Embodiment]

In the first embodiment, control of precharging and the subsequent control for stepping up a voltage when abnormality of a voltage sensor is detected through a self-diagnosis during activation of a vehicle was described. Additionally, abnormality of the voltage sensor may be detected after completion of activation of the vehicle (ReadyON state).

In the vehicle shown in Fig. 1, after the vehicle enters the ReadyON state, voltage VH is controlled in accordance with requested driving force which is determined based on a motor revolution speed, an accelerator pedal position, and the like. Accordingly, control device 30 controls voltage converter 12M based on VH detected by voltage sensor 13. When the power supply unit on the slave side is used in combination with the one on the master side, voltage converter 12S is subjected to current control through detection of a current through reactor L1S, and voltage converter 12M on the master side is subjected to voltage control through detection of voltage VH.

Voltage VH thus detected by voltage sensor 13 is important to carry out feedback control for making a target voltage of the voltage converter and an actual output voltage equal to each other. It may be determined, however, that a value detected by this voltage sensor 13 cannot be used. In this case, voltage converter 12M may be controlled to be in the upper-arm-ON state (a state where IGBT element Q1M is rendered conductive and IGBT element Q2M is rendered nonconductive), causing a voltage of battery BM to be output without change to positive electrode bus PL2, while battery BS may be disconnected from the system by connection unit 40S. As a result, temporary travel in limp-home mode can be achieved.

If the voltage of battery BM is used as it is without stepping up voltage VH, however, motor generator MG2 revolves at higher speed and a counterelectromotive force increases. Control thus becomes difficult, resulting in inability to travel at high speed and deterioration in travel performance. Therefore, in the present embodiment, even when an output value from voltage sensor 13 cannot be used, a detected value from another voltage sensor 21S is used so that voltage converter 12M steps up a voltage.

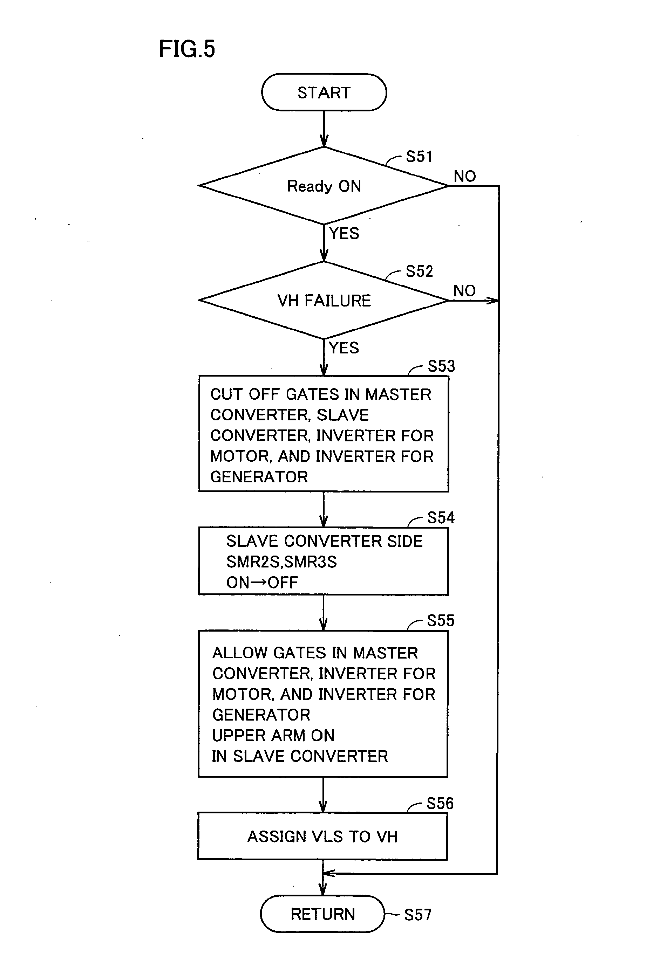

Fig. 5 is a flowchart for illustrating a process when failure is detected, which is performed in the second embodiment. The process in this flowchart is called from the main routine for controlling travel of the vehicle and executed at regular time intervals or when a predetermined condition is satisfied.

Referring to Figs. 1 and 5, first, at step S51, it is confirmed whether or not the vehicle is in a state where activation thereof has been completed (ReadyON state). Here, the ReadyON state means that the system is in a normal state, system main relays SMR2M, SMR3M on the master side and system main relays SMR2S, SMR3S on the slave side are connected, and a vehicle is capable of traveling.

If it is determined at step S51 that the vehicle is not in the ReadyON state, the process proceeds to step S57, where control is moved to the main routine. If it is determined at step S51 that the vehicle is in the ReadyON state, on the other hand, the process proceeds to step S52.

At step S52, failure is detected in a manner similar to step S2 in the first embodiment, and function abnormality of voltage sensor 13 is additionally checked. The function abnormality includes, for example, offset abnormality, characteristic abnormality, and high-voltage power supply line abnormality.

The offset abnormality is abnormality where voltage sensor 13 does not correctly convert voltage VH. In this case, the abnormality can be detected from a phenomenon in which voltage VH detected by voltage sensor 13 does not decrease after being once stepped up by the voltage converter even by an operation of stopping the voltage step-up function and causing the smoothing capacitor to discharge. The characteristic abnormality is abnormality such as breaking of a line and deviation of gain in voltage sensor 13. The high-voltage power supply line abnormality is zero fixation of voltage sensor 13 and the like, in which the voltage is not stepped up even after capacitor CH is precharged.

If failure of VH is not detected at step S52, the process proceeds to step S57, where control is moved to the main routine. If failure of VH is detected at step S52, on the other hand, the process proceeds to step S53.

At step S53, a gate cutoff instruction is provided to voltage converter 12M on the master side and voltage converter 12S on the slave side by signals M-CSDN and S-CSDN, respectively. The IGBT elements in inverter 22 for a motor (motor generator MG2) and inverter 14 for a generator (motor generator MG1) are also controlled to be in a gate cutoff state. Then, at step S54, system main relays SMR2S, SMR3S on the side of slave voltage converter 12S are changed from an ON state to an OFF state.

Thereafter, at step S55, voltage converter 12M on the master side has the gate cutoff instruction canceled by signal M-CSDN and is allowed to step up a voltage, and voltage converter 12S on the slave side has the gate cutoff instruction canceled by signal S-CSDN and is controlled to be in the upper-arm-ON state. Further, the IGBT elements in inverter 22 for a motor (motor generator MG2) and inverter 14 for a generator (motor generator MG1) are also controlled to be in a gate-allowed state.

In this state, a value of voltage VLS detected by voltage sensor 21S is almost equal to voltage VH that was supposed to be detected by voltage sensor 13, and thus at step S56, the value of voltage VLS is assigned to the VH variable. Consequently, voltage converter 12M can carry out feedback control of a voltage on its output side, and can therefore resume the voltage step-up operation. Thereafter at step S57, control is moved to the main routine for controlling travel.

The following should be considered in using voltage sensor 21S instead of voltage sensor 13.

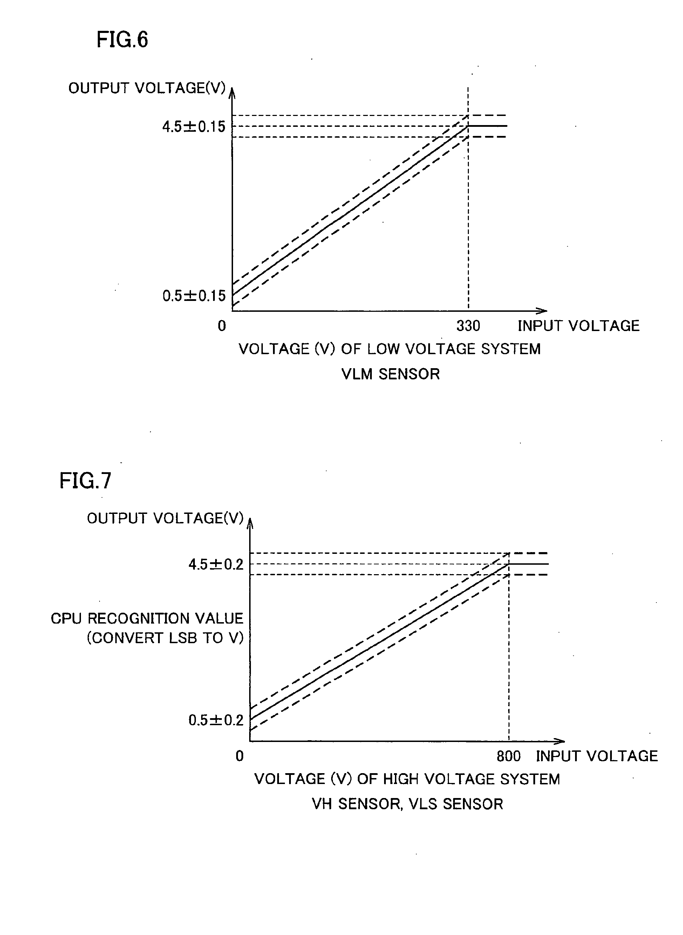

Fig. 6 shows an output characteristic of a voltage sensor for a low voltage system.
Fig. 7 shows an output characteristic of a voltage sensor for a high voltage system.

An output voltage of the voltage sensors shown in Figs. 6 and 7 is subjected to analog-to-digital conversion within an ECU. This conversion is performed, for example, at an A/D converter contained in a CPU. The A/D converter has an input range of about 0 to 5 V. The A/D conversion is performed within this input range with a resolution of at least 10 bits, and a voltage value is recognized by the CPU.

As shown in Fig. 6, the sensor for a low voltage system, i.e., a sensor for detecting a voltage before being stepped up by a voltage converter, should only have an input voltage range of about 0 to 330 V with some margin from a range of a battery voltage. Therefore, voltage sensor 21M for detecting voltage VLM and voltage sensor 21S for detecting voltage VLS should only have such a characteristic as shown in Fig. 6 as long as performing normal operation.

In addition, voltage sensor 13 for detecting stepped-up voltage VH needs to be able to detect an input voltage in a range from 0 to 800V.

In the second embodiment, however, voltage sensor 21S needs to detect a voltage stepped up by voltage converter 12M in the event of failure of voltage sensor 13. Thus, in the second embodiment, at least voltage sensor 21S needs to have a characteristic the same as that of voltage sensor 13 shown in Fig. 7. Additionally, in converting a digital value converted by the A/D converter receiving that output to a detected voltage as well, it needs to be converted to a voltage based on Fig. 7.

Voltage sensor 21M may still have the characteristic in Fig. 6, or may have the characteristic in Fig. 7.

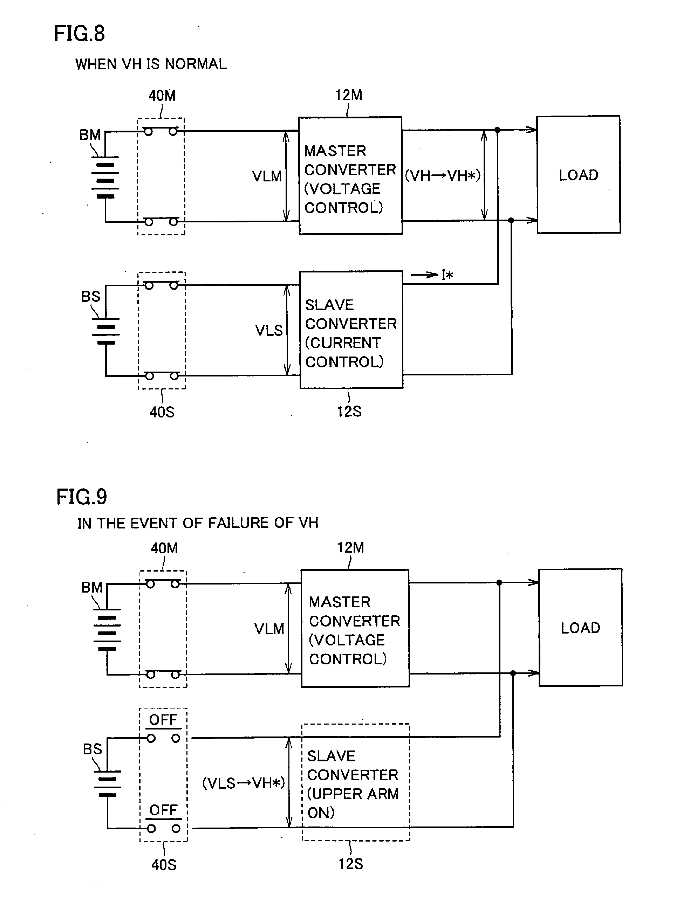

Fig. 8 illustrates control of the voltage converters when VH is normal after the vehicle enters the ReadyON state in the first or second embodiment.

Referring to Fig. 8, when VH is normal, voltage converter 12S on the slave side is subjected to current control to supply a target current I*, which is the entire current or a part thereof in accordance with a current to be used by a load. Here, connection unit 40S is in a connected state, and controlled such that battery BS supplies electric power corresponding to current I*.

Meanwhile, voltage converter 12M on the master side is subjected to voltage control where voltage VH is detected and made to attain to a target voltage VH* such that a voltage provided to the load is not varied.

Fig. 9 illustrates control of the voltage converters in the event of failure of VH after the vehicle enters the ReadyON state in the first or second embodiment.

Referring to Fig. 9, in the event of failure of VH, voltage converter 12S on the slave side is controlled to be in the upper-arm-ON state and connection unit 40S is set to an OFF state, so that voltage VLS becomes equal to voltage VH. Accordingly, voltage converter 12M on the master side is subjected to voltage control such that voltage VLS attains to target voltage VH*.

As a result, a high voltage can be supplied to the load, preventing deterioration in travel performance of the vehicle.

Lastly, the first and second embodiments described above will be summarized with reference to Fig. 1 and the like. The power supply apparatus for a vehicle according to an embodiment of the present application includes the first power storage device (battery BM), the power supply line (positive electrode bus PL2) for feeding power to inverters 14, 22 for driving the motors, first voltage converter 12M provided between the first power storage device and the power supply line, for converting a voltage, the second power storage device (battery BS), second voltage converter 12S provided between the second power storage device and the power supply line, for converting a voltage, connection unit 40S provided between the second power storage device and the second voltage converter, for switching an electrically connected state, first voltage sensor 13 for detecting a voltage of the power supply line, second voltage sensor 21S for detecting a voltage of a terminal on a side of the connection unit of second voltage converter 12S, and control device 30 for controlling the first and second voltage converters and the connection unit. When failure that renders an output from first voltage sensor 13 unusable is detected, control device 30 sets connection unit 40S to a non-connected state and controls second voltage converter 12S to be in a voltage non-conversion state, and causes the terminal on the side of connection unit 40S of second voltage converter 12S to output a voltage of the power supply line (positive electrode bus PL2), thereby controlling a voltage of the power supply line based on an output from second voltage sensor 21S instead of the output from first voltage sensor 13.

Preferably, the power supply line includes positive electrode bus PL2 and negative electrode bus SL. The power supply apparatus for a vehicle further includes smoothing capacitor CH connected between positive electrode bus PL2 and negative electrode bus SL. Control device 30 controls precharging to smoothing capacitor CH as a type of voltage control of the power supply line.

Still preferably, the power supply apparatus for a vehicle further includes master connection unit 40M provided between the first power storage device (battery BM) and first voltage converter 12M, for switching an electrically connected state among a first connected state (connected with SMR2M), a second connected state (connected with SMR1M) with a resistance being higher than in the first connected state, and a non-connected state. In controlling the precharging, control device 30 switches master connection unit 40M from the non-connected state to the second connected state to start precharging to smoothing capacitor CH in response to a vehicle activation instruction, and thereafter switches master connection unit 40M from the second connected state to the first connected state based on the output from second voltage sensor 21S.

Preferably, control device 30 controls a voltage of first voltage converter 12M as a type of voltage control of the power supply line.

Still preferably, when the output from first voltage sensor 13 can be used, control device 30 controls the voltage of first voltage converter 12M based on the output from first voltage sensor 13, and controls a current through second voltage converter 12S such that the current passing through second voltage converter 12S attains to a target current by setting connection unit 40S to a connected state.

Preferably, first voltage sensor 13 and second voltage sensor 21S are equal to each other in a measurable input voltage range.

Still preferably, the power supply apparatus for a vehicle further includes master connection unit 40M provided between the first power storage device (battery BM) and first voltage converter 12M, for switching an electrically connected state, and third voltage sensor 21M for detecting a voltage of a terminal on a side of the master connection unit of first voltage converter 12M. First and second voltage sensors 13, 21S are higher than third voltage sensor 21M in a measurable upper limit voltage.

With such configuration and control, a high voltage can be supplied to the inverter, preventing deterioration in travel performance of the vehicle. Moreover, travel in limp-home mode can be resumed even after stopping the power supply system for the vehicle.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

## Claims

1. A power supply apparatus for a vehicle, comprising:
a first power storage device (BM);
a power supply line (PL2) for feeding power to an inverter (14, 22) for driving a motor;
a first voltage converter (12) provided between said first power storage device and said power supply line, for converting a voltage;
a second power storage device (BS);
a second voltage converter (12S) provided between said second power storage device and said power supply line, for converting a voltage;
a connection unit (40S) provided between said second power storage device and said second voltage converter, for switching an electrically connected state;
a first voltage sensor (13) for detecting a voltage of said power supply line;
a second voltage sensor (21S) for detecting a voltage of a terminal on a side of said connection unit of said second voltage converter (12S); and
a control device (30) for controlling said first and second voltage converters and said connection unit,
when failure that renders an output from said first voltage sensor (13) unusable is detected, said control device (30) setting said connection unit (40S) to a non-connected state and controlling said second voltage converter (12S) to be in a voltage non-conversion state, and causing the terminal on the side of said connection unit (40S) of said second voltage converter (12S) to output a voltage of said power supply line (PL2), thereby controlling a voltage of said power supply line based on an output from said second voltage sensor (21S) instead of the output from said first voltage sensor (13).

2. The power supply apparatus for a vehicle according to claim 1, wherein
said power supply line includes a positive electrode bus (PL2) and a negative electrode bus (SL),
the power supply apparatus for a vehicle further comprises a smoothing capacitor (CH) connected between said positive electrode bus and said negative electrode bus, and
said control device controls precharging to said smoothing capacitor as a type of voltage control of said power supply line.

3. The power supply apparatus for a vehicle according to claim 2, further comprising a master connection unit (40M) provided between said first power storage device (BM) and said first voltage converter (12M), for switching an electrically connected state among a first connected state, a second connected state with a resistance being higher than in said first connected state, and a non-connected state, wherein
in controlling said precharging, said control device (30) switches said master connection unit (40M) from the non-connected state to said second connected state to start precharging to said smoothing capacitor in response to a vehicle activation instruction, and thereafter switches said master connection unit (40M) from said second connected state to said first connected state based on the output from said second voltage sensor (21S).

4. The power supply apparatus for a vehicle according to claim 1, wherein
said control device (30) controls a voltage of said first voltage converter (21M) as a type of voltage control of said power supply line.

5. The power supply apparatus for a vehicle according to claim 4, wherein
when the output from said first voltage sensor (13) can be used, said control device (30) controls the voltage of said first voltage converter (12M) based on the output from said first voltage sensor (13), and controls a current through said second voltage converter (12S) such that the current passing through said second voltage converter (12S) attains to a target current by setting said connection unit (40S) to a connected state.

6. The power supply apparatus for a vehicle according to claim 1, wherein
said first voltage sensor (13) and said second voltage sensor (21S) are equal to each other in a measurable input voltage range.

7. The power supply apparatus for a vehicle according to claim 6, further comprising:
a master connection unit (40M) provided between said first power storage device (BM) and said first voltage converter (12M), for switching an electrically connected state; and
a third voltage sensor (21M) for detecting a voltage of a terminal on a side of said master connection unit (40M) of said first voltage converter (12M), wherein
said first and second voltage sensors (13, 21S) are higher than said third voltage sensor (21M) in a measurable upper limit voltage.
